# EUROPÄISCHE PATENTANMELDUNG

(11) **EP 4 645 829 A1**
(43) Veröffentlichungstag der Anmeldung: **05.11.2025**
(21) Anmeldenummer: 25163531.4
(22) Anmeldetag: 13.03.2025
(51) Int. Cl.: H04L 67/12, H04L 67/567, H04L 67/568

(54) **SYSTEM UND VERFAHREN ZUM STEUERN EINES SENSORSYSTEMS**

(30) Priorität: 03.05.2024 DE 102024112481
(71) Anmelder: SICK AG, 79183 Waldkirch (DE)
(72) Erfinder: SCHWEIZER, Marius, 79215 Elzach (DE); KLEIN, Philipp, 79261 Gutach (DE); KIBBEL, Jörg, 79183 Waldkirch (DE)
(74) Vertreter: Manitz Finsterwald Patent- und Rechtsanwaltspartnerschaft mbB

(57) **Zusammenfassung**

Ein Sensorsystem umfasst einen Sensor, der im Betrieb Sensordaten ausgibt, eine webbasierte Benutzerschnittstelle zum Anzeigen der ausgegebenen Sensordaten auf einem Endgerät sowie zum Übermitteln von Steueranweisungen eines Benutzers von dem Endgerät an den Sensor und einen Datenrekorder, der mit dem Sensor in Verbindung steht und dazu ausgebildet ist, von dem Sensor ausgegebene Sensordaten zu empfangen und auf einem Speichermedium abzuspeichern. Der Datenrekorder weist eine Vermittlungseinrichtung auf, die dazu ausgebildet ist, von dem Sensor empfangene Sensordaten an die webbasierte Benutzerschnittstelle weiterzuleiten und/oder von der webbasierten Benutzerschnittstelle empfangene Steueranweisungen an den Sensor weiterzuleiten.

## Beschreibung

Die Erfindung betrifft ein Sensorsystem mit wenigstens einem Sensor, der im Betrieb Sensordaten ausgibt, mit einer webbasierten Benutzerschnittstelle zum Anzeigen der ausgegebenen Sensordaten auf einem Endgerät und zum Übermitteln von Steueranweisungen eines Benutzers von dem Endgerät an den Sensor und mit einem Datenrekorder, der mit dem Sensor in Verbindung steht und dazu ausgebildet ist, von dem Sensor ausgegebene Sensordaten zu empfangen und auf einem Speichermedium abzuspeichern.

Solche Sensorsysteme werden beispielsweise dazu eingesetzt, industrielle Prozesse zu überwachen und die Prozessdaten zur Dokumentation sowie für eine spätere Analyse zu archivieren. Insbesondere bei abtastenden Sensoren wie zum Beispiel LIDAR-Sensoren fallen hierbei relativ große Datenmengen an, für welche die Speicherkapazität des Datenrekorders ausgelegt sein muss. Der Datenrekorder kann auch dazu ausgebildet sein, von mehreren Sensoren gleichzeitig Datenströme zu empfangen und abzuspeichern.

Über die webbasierte Benutzerschnittstelle kann ein Benutzer schnell und einfach auf den Sensor zugreifen, um ihn zum Beispiel auszulesen und/oder Parameter festzulegen. Als Endgerät kann ein Desktop-Computer, ein Notebook, ein Tablet-Computer oder ein Smartphone dienen, wobei die Verbindung zum Sensor beispielsweise über eine Netzwerkadresse hergestellt wird. Der Benutzer kann die webbasierte Benutzerschnittstelle über einen Browser aufrufen. Demgemäß muss auf dem Endgerät keine spezielle Software zur Kommunikation mit dem Sensor installiert sein.

Die Funktionen des Datenrekorders können über eine fest installierte Bedieneinheit oder über eine eigenständige Benutzerschnittstelle gesteuert werden. Die separate Kommunikation mit dem Sensor einerseits und mit dem Datenrekorder andererseits ist jedoch mit einem beträchtlichen Bedienungs- und Wartungs-Aufwand verbunden. Außerdem ist es für einen Benutzer lästig, sich zum Aufrufen von Aufnahme- und Wiedergabe-Funktionen zu dem Datenrekorder zu begeben.

Es ist eine Aufgabe der Erfindung, eine einfachere Bedienung von Sensorsystemen der oben genannten Art zu ermöglichen.

Die Lösung der Aufgabe erfolgt durch ein Sensorsystem mit den Merkmalen des Anspruchs 1.

Erfindungsgemäß weist der Datenrekorder eine Vermittlungseinrichtung auf, die dazu ausgebildet ist, von dem Sensor empfangene Sensordaten an die webbasierte Benutzerschnittstelle weiterzuleiten und/oder von der webbasierten Benutzerschnittstelle empfangene Steueranweisungen an den Sensor weiterzuleiten.

Die Vermittlungseinrichtung ermöglicht ein Ansprechen des Sensors über den Datenrekorder. Somit ist es nicht erforderlich, zwei separate Benutzerschnittstellen - einerseits für den Sensor und andererseits für den Datenrekorder - bereitzustellen und zu pflegen. Vielmehr kann der Benutzer über ein und dieselbe Benutzerschnittstelle sowohl auf den Sensor als auch auf den Datenrekorder zugreifen. Eine Weiterentwicklung oder Software-Aktualisierung kann auf eine einzelne Art von Benutzerschnittstelle beschränkt werden.

Die Weiterleitung der Sensordaten und der Steueranweisungen kann je nach Anwendung direkt erfolgen oder über wenigstens eine zusätzliche Zwischenstation.

Die Vermittlungseinrichtung kann einen zwischen das Endgerät und den Sensor geschalteten Proxy bilden. Somit kann der Benutzer so mit dem Sensor kommunizieren, als ob eine direkte Verbindung bestehen würde. Bei Bedarf kann der Proxy zusätzliche Schutz- oder Kontrollfunktionen bereitstellen.

Gemäß einer Ausführungsform der Erfindung ist der Datenrekorder dazu ausgebildet, abgespeicherte Sensordaten von dem Speichermedium abzurufen, wobei die Vermittlungseinrichtung dazu ausgebildet ist, die abgerufenen Sensordaten an die webbasierte Benutzerschnittstelle weiterzuleiten. Somit kann sich der Benutzer nicht nur aktuelle Sensordaten über die webbasierte Benutzerschnittstelle anzeigen lassen, sondern auch archivierte Sensordaten. Vorzugsweise ist die Art der Darstellung für aktuelle Sensordaten und für abgespeicherte Sensordaten identisch.

Vorzugsweise ist der Datenrekorder über die webbasierte Benutzerschnittstelle steuerbar. Dadurch ist die Bedienung des Sensorsystems weiter vereinfacht. Insbesondere kann ein Start und ein Stopp von Speichervorgängen, ein Aufrufen von abgespeicherten Datensätzen und/oder ein Setzen von Parametern des Datenrekorders über die webbasierte Benutzerschnittstelle vorgesehen sein. Zu diesem Zweck kann der Datenrekorder, insbesondere die Vermittlungseinrichtung, eine Programmierschnittstelle (*application programming interface,* API) bereitstellen, über welche die Aufzeichnung, Speicherung und Wiedergabe von Sensordaten gesteuert wird.

Der Datenrekorder kann dazu ausgebildet sein, mittels der webbasierten Benutzerschnittstelle wenigstens ein die Steuerung des Datenrekorders betreffendes Bedienfeld auf dem Endgerät anzuzeigen. Somit kann der Datenrekorder in besonders einfacher Weise gesteuert werden, je nach Endgerät über einen berührungsempfindlichen Bildschirm (Touchscreen) oder über andere Eingabegeräte wie eine Tastatur oder eine Maus.

Gemäß einer speziellen Ausgestaltung der Erfindung ist das wenigstens eine Bedienfeld einem zum Darstellen der Sensordaten vorgesehenen Anzeigefeld überlagert. Somit kann der Benutzer den Datenrekorder mittels des Bedienfelds ansteuern, ohne hierfür die Anzeige der Sensordaten unterbrechen zu müssen.

Das wenigstens eine Bedienfeld kann wenigstens ein Bedienelement zum Starten eines Speichervorgangs und/oder wenigstens ein Bedienelement zum Starten eines Abrufvorgangs aufweisen. Somit sind die Basisfunktionen des Datenrekorders über die webbasierte Benutzerschnittstelle aufrufbar. Das Stoppen eines gestarteten Speichervorgangs kann ebenfalls über das Bedienelement zum Starten eines Speichervorgangs erfolgen, wobei vorzugsweise die Darstellung des Bedienelements von "Start" auf "Stopp" wechselt, wenn der Speichervorgang läuft. Das Bedienelement zum Starten eines Abrufvorgangs kann eine zweite Ebene aufweisen, die beim Anwählen aufgerufen wird und die eine Auswahl von abgespeicherten Datensätzen ermöglicht.

Gemäß einer weiteren Ausführungsform der Erfindung ist die Vermittlungseinrichtung dazu ausgebildet, zumindest in einem Live-Modus sämtliche von dem Sensor empfangenen Sensordaten an die webbasierte Benutzerschnittstelle weiterzuleiten und sämtliche von der webbasierten Benutzerschnittstelle empfangenen Steueranweisungen an den Sensor weiterzuleiten. Somit sieht der Benutzer alle aktuellen Sensordaten, als ob er direkt mit dem Sensor verbunden wäre.

Der Datenrekorder kann einen netzwerkfähigen Computer und wenigstens ein mit diesem verbundenes Datenspeichergerät umfassen. Dies ermöglicht die Bereitstellung einer besonders großen Speicherkapazität und unterstützt eine zentrale Archivierung unterschiedlicher Prozessdaten. Das Datenspeichergerät kann ein Festplattenlaufwerk, ein Halbleiterlaufwerk und/oder einen Netzwerkspeicher umfassen. Der Computer kann als Server betrieben werden und ein spezielles Dateisystem oder eine Datenbank für die Sensordaten bereitstellen.

Eine weitere Ausführungsform der Erfindung sieht vor, dass das Sensorsystem mehrere Sensoren umfasst und die Vermittlungseinrichtung durch einen Server gebildet ist, der mit jedem der Sensoren in Verbindung steht und dazu ausgebildet ist, Sensordaten aller verbundenen Sensoren an die webbasierte Benutzerschnittstelle weiterzuleiten und von der webbasierten Benutzerschnittstelle empfangene, für einen der verbundenen Sensoren bestimmte Steueranweisungen an den betreffenden Sensor weiterzuleiten. Somit kann eine Vielzahl von unterschiedlichen Sensordaten zentral verwaltet werden.

Bevorzugt ist der Sensor ein Laserscanner, insbesondere ein LIDAR-Sensor. Grundsätzlich kann der Sensor auch ein RADAR-Sensor oder ein TOF-Sensor ("Time-of-Flight"-Sensor) sein. Bei Sensoren, die im Allgemeinen eine besonders große Datenmenge ausgeben, kommen die Vorteile der Erfindung besonders zur Geltung.

Die Erfindung betrifft auch ein Verfahren zum Steuern eines Sensorsystems, das wenigstens einen Sensor, der im Betrieb Sensordaten ausgibt, und einen Datenrekorder zum Abspeichern der von dem Sensor ausgegebenen Sensordaten auf einem Speichermedium umfasst, insbesondere zum Steuern eines wie vorstehend beschriebenen Sensorsystems.

Ein erfindungsgemäßes Verfahren umfasst die Schritte:
- Aufbauen einer Verbindung zwischen dem Datenrekorder und dem Sensor,
- Aufbauen einer Verbindung zwischen dem Datenrekorder und einem separaten Endgerät,
- Weiterleiten von Sensordaten von dem Sensor an das Endgerät mittels einer Vermittlungseinrichtung des Datenrekorders,
- Anzeigen der weitergeleiteten Sensordaten auf dem Endgerät mittels einer webbasierten Benutzerschnittstelle,
- Empfangen von Steueranweisungen eines Benutzers am Endgerät über die webbasierte Benutzerschnittstelle, und
- Weiterleiten der Steueranweisungen von dem Endgerät an den Sensor mittels der Vermittlungseinrichtung.

Der Sensor wird also über den Datenrekorder angesprochen. Somit kann die webbasierte Benutzerschnittstelle sowohl für einen Zugriff auf den Sensor als auch für einen Zugriff auf den Datenrekorder genutzt werden. Es ist dann nicht erforderlich, zwei separate Benutzerschnittstellen bereitzustellen und zu pflegen.

Es kann vorgesehen sein, dass von dem Sensor ausgegebene Sensordaten auf dem Speichermedium abgespeichert werden und/oder zuvor abgespeicherte Sensordaten von dem Speichermedium abgerufen werden, wenn ein Benutzer dies über die webbasierte Benutzerschnittstelle anweist. Somit können zumindest die Grundfunktionen des Datenrekorders webbasiert über die Benutzerschnittstelle des Sensors aufgerufen werden.

Bevorzugt werden auf dem Endgerät mittels der webbasierten Benutzerschnittstelle von dem Speichermedium abgerufene Sensordaten angezeigt, wenn ein Benutzer dies über die webbasierte Benutzerschnittstelle anweist. Der Benutzer kann sich demgemäß auf dem Endgerät nicht nur aktuelle Sensordaten anzeigen lassen, sondern auch zuvor gespeicherte Sensordaten.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine schematische Darstellung eines erfindungsgemäßen Sensorsystems.
- Fig. 2: zeigt eine webbasierte Benutzerschnittstelle des Sensorsystems gemäß Fig. 1.

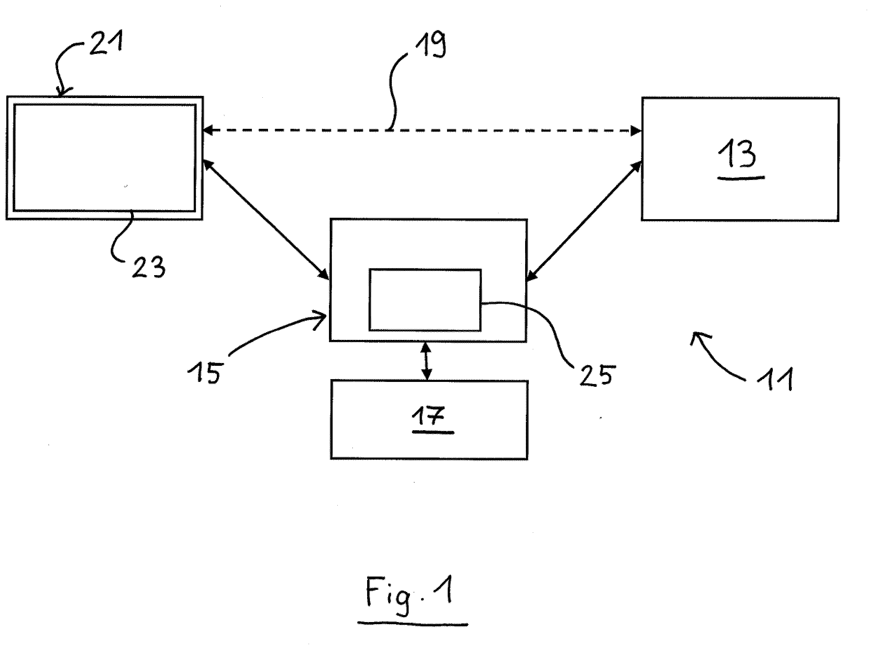

Das in Fig. 1 gezeigte, gemäß einer Ausführungsform der Erfindung gestaltete Sensorsystem 11 umfasst einen Sensor 13 wie zum Beispiel einen LIDAR-Sensor. Der Sensor 13 ist dazu ausgebildet, wenigstens eine Messgröße zu erfassen und einen kontinuierlichen Strom von Sensordaten wie zum Beispiel Abstandsdaten auszugeben.

Weiterhin umfasst das Sensorsystem 11 einen mit dem Sensor 13 in Verbindung stehenden Datenrekorder 15, dem ein Speichermedium 17 zugeordnet ist. Der Datenrekorder 15 ist dazu ausgebildet, die von dem Sensor 13 ausgegebenen Sensordaten zu empfangen und wenigstens teilweise auf dem Speichermedium 17 abzuspeichern. Der Datenrekorder 15 kann einen netzwerkfähigen Computer umfassen, der Zugriff auf ein Dateisystem, eine Datenbank oder einen Netzwerkspeicher hat. Der Datenrekorder 15 kann auch als zentraler Server ausgeführt sein, der mit mehreren Sensoren 13 gleichzeitig verbunden ist, was in Fig. 1 jedoch nicht dargestellt ist.

Der Sensor 13 ist netzwerkfähig und steht über eine Direktverbindung 19 mit einem Endgerät 21 wie zum Beispiel einem Tablet-Computer in Verbindung. Über eine webbasierte Benutzerschnittstelle 23, die auf dem Endgerät 21 implementiert ist, kann ein Benutzer den Sensor 13 ansprechen. Insbesondere dient die webbasierte Benutzerschnittstelle 23 zum Anzeigen der aktuell von dem Sensor 13 ausgegebenen Sensordaten, je nach Anwendung in grafischer Form und/oder als Zeichenketten, und zum Übermitteln von Steueranweisungen wie zum Beispiel Parameter-Änderungen an den Sensor 13.

Der Datenrekorder 15 weist eine Vermittlungseinrichtung 25 auf, die einen zwischen das Endgerät 21 und den Sensor 13 geschalteten Proxy bildet. Die Vermittlungseinrichtung 25 ist dazu ausgebildet, während des Betriebs des Sensorsystems 11 sämtliche von dem Sensor 13 empfangenen Sensordaten an die webbasierte Benutzerschnittstelle 23 weiterzuleiten und sämtliche von der webbasierten Benutzerschnittstelle 23 empfangenen Steueranweisungen an den Sensor 13 weiterzuleiten. Somit ist der Sensor 13 indirekt, nämlich über den Datenrekorder 15, ansprechbar und ansteuerbar, so dass die Direktverbindung 19 nicht zwingend erforderlich ist und in bestimmten Anwendungssituationen auch weggelassen werden könnte.

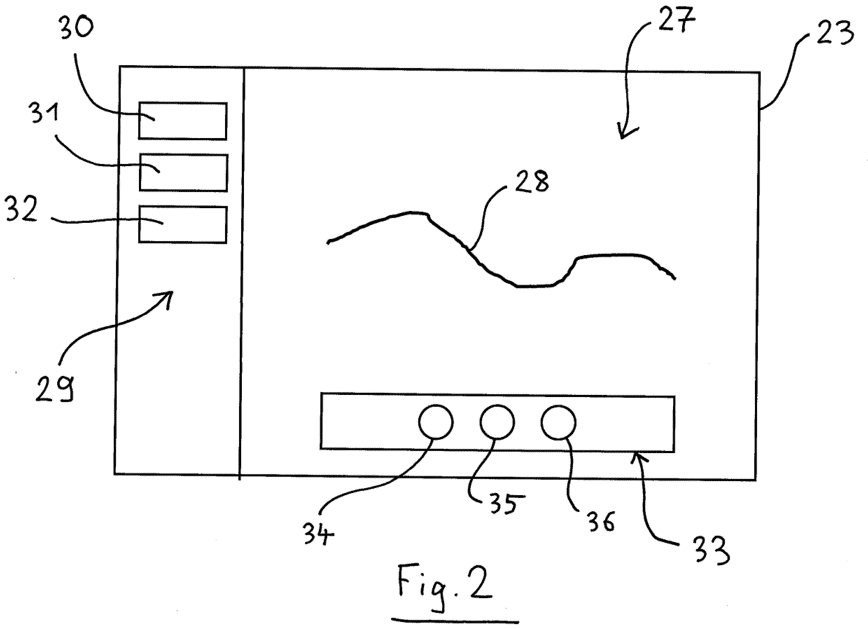

Ferner ist der Datenrekorder 15 über die webbasierte Benutzerschnittstelle 23 steuerbar. Zu diesem Zweck läuft auf dem Datenrekorder 15 eine Applikation, die eine Programmierschnittstelle für die Datenspeicherung und die Datenwiedergabe bereitstellt. Der Benutzer kann dann über das Endgerät 21 die Funktionen des Datenrekorders 15 steuern und sich überdies gespeicherte Sensordaten anzeigen lassen, wie nachfolgend unter zusätzlicher Bezugnahme auf Fig. 2 näher ausgeführt wird.

Fig. 2 zeigt eine beispielhafte Gestaltung der webbasierten Benutzerschnittstelle 23. Die webbasierte Benutzerschnittstelle 23 kann über eine beliebige herkömmliche Browser-Applikation aufgerufen werden und umfasst ein Anzeigefeld 27 zum Anzeigen von Sensordaten, hier beispielhaft als Kurve 28 gezeigt. Weiterhin dient ein Sensor-Steuerfeld 29 mit mehreren Steuerelementen 30, 31, 32 dazu, bei Bedarf Parameter-Einstellungen am Sensor 13 (Fig. 1) vorzunehmen. Dem Anzeigefeld 27 überlagert ist ein Datenrekorder-Bedienfeld 33 mit mehreren Bedienelementen 34, 35, 36.

Wenn ein Benutzer über die Browser-Applikation die Netzwerkadresse des Sensors 13 aufruft, enthält die webbasierte Benutzerschnittstelle 23 nur das Anzeigefeld 27 und das Steuerfeld 29, aber nicht das Datenrekorder-Bedienfeld 33. Der Benutzer kann dann ohne Einbeziehung des Datenrekorders 15 mit dem Sensor 13 kommunizieren, also die aktuellen Sensordaten betrachten und bei Bedarf eine Parametrierung vornehmen.

Wenn der Benutzer dagegen die Netzwerkadresse des Datenrekorders 15 aufruft, enthält die webbasierte Benutzerschnittstelle 23 nicht nur das Anzeigefeld 27 und das Steuerfeld 29, sondern auch wie in Fig. 2 gezeigt das Datenrekorder-Bedienfeld 33. Der Benutzer kann wie bei einem direkten Aufruf des Sensors 13 mit diesem kommunizieren und insbesondere die aktuellen Sensordaten auf dem Anzeigefeld 27 betrachten. Jeglicher Datenverkehr läuft hierbei über den Datenrekorder 15.

Darüber hinaus kann der Benutzer mittels der Bedienelemente 34, 35, 36 des Datenrekorder-Steuerfelds 33 steuernd auf den Datenrekorder 15 zugreifen. Beispielsweise kann der Benutzer einen Speichervorgang starten oder stoppen. Ebenso können mittels des Datenrekorder-Steuerfelds 33 abgespeicherte Sensordaten von dem Speichermedium 17 abgerufen und anstelle der aktuellen Sensordaten auf dem Anzeigefeld 27 angezeigt werden. Die Vermittlungseinrichtung 25 des Datenrekorders 15 sorgt hierbei dafür, dass die vom Speichermedium 17 abgerufenen Sensordaten an die webbasierte Benutzerschnittstelle 23 weitergeleitet werden.

Die webbasierte Benutzerschnittstelle 23 kann ein in Fig. 2 nicht dargestelltes Schaltfeld aufweisen, mittels dem zwischen einem Live-Modus, in dem sämtliche von dem Sensor 13 ausgegebenen Sensordaten in Echtzeit auf dem Anzeigefeld 27 angezeigt werden, und einem Wiedergabe-Modus, in dem gespeicherte und zuvor ausgewählte Sensordaten auf dem Anzeigefeld 27 angezeigt werden, umgeschaltet werden kann.

Zum Steuern des Sensorsystems 11 wird über ein Netzwerk, beispielsweise über ein lokales Netzwerk oder über das Internet, eine Verbindung zwischen dem Datenrekorder 15 und dem Sensor 13 sowie zwischen dem Endgerät 21 und dem Datenrekorder 15 aufgebaut. Mittels der Vermittlungseinrichtung 25 werden sämtliche Sensordaten von dem Sensor 13 an die webbasierte Benutzerschnittstelle 23 des Endgeräts 21 übermittelt und auf dem Anzeigefeld 27 dargestellt. Falls über die Steuerelemente 30, 31, 32 der webbasierten Benutzerschnittstelle 23 Steueranweisungen für den Sensor 13 ausgegeben werden, werden diese von der Vermittlungseinrichtung 25 an den Sensor 13 weitergeleitet. Wenn der Benutzer über das Datenrekorder-Steuerfeld 33 eine den Datenrekorder 15 betreffende Steueranweisung ausgibt, beispielsweise das Starten eines Speichervorgangs, wird diese auf dem Datenrekorder 15 ausgeführt. Wenn gespeicherte Sensordaten vom Datenrekorder 15 abgerufen werden, werden diese anstelle der Live-Sensordaten auf dem Anzeigefeld 27 dargestellt.

Dadurch dass der Sensor 13 einerseits und der Datenrekorder 15 andererseits über die gleiche webbasierte Benutzerschnittstelle 23 angesprochen werden, müssen keine separaten Benutzerschnittstellen bereitgestellt und gepflegt werden. Die Steuerung beider Geräte kann bequem mittels eines handlichen Endgeräts 21 über ein kabelgestütztes oder kabelloses Netzwerk erfolgen.

### Bezugszeichenliste:

- 11: Sensorsystem
- 13: Sensor
- 15: Datenrekorder
- 17: Speichermedium
- 19: Direktverbindung
- 21: Endgerät
- 23: webbasierte Benutzerschnittstelle
- 25: Vermittlungseinrichtung
- 27: Anzeigefeld
- 29: Sensor-Steuerfeld
- 30: Steuerelement
- 31: Steuerelement
- 32: Steuerelement
- 33: Datenrekorder-Steuerfeld
- 34: Bedienfeld
- 35: Bedienfeld
- 36: Bedienfeld

## Patentansprüche

1. Sensorsystem (11) mit
wenigstens einem Sensor (13), der im Betrieb Sensordaten ausgibt, einer webbasierten Benutzerschnittstelle (23) zum Anzeigen der ausgegebenen Sensordaten auf einem Endgerät (21) und zum Übermitteln von Steueranweisungen eines Benutzers von dem Endgerät (21) an den Sensor (13) und
einem Datenrekorder (15), der mit dem Sensor (13) in Verbindung steht und dazu ausgebildet ist, von dem Sensor (13) ausgegebene Sensordaten zu empfangen und auf einem Speichermedium (17) abzuspeichern,
wobei der Datenrekorder (15) eine Vermittlungseinrichtung (25) aufweist, die dazu ausgebildet ist, von dem Sensor (13) empfangene Sensordaten an die webbasierte Benutzerschnittstelle (23) weiterzuleiten und/oder von der webbasierten Benutzerschnittstelle (23) empfangene Steueranweisungen an den Sensor (13) weiterzuleiten.

2. Sensorsystem nach Anspruch 1,
wobei die Vermittlungseinrichtung (25) einen zwischen das Endgerät (21) und den Sensor (13) geschalteten Proxy bildet.

3. Sensorsystem nach Anspruch 1 oder 2,
wobei der Datenrekorder (15) dazu ausgebildet ist, abgespeicherte Sensordaten von dem Speichermedium (17) abzurufen und wobei die Vermittlungseinrichtung (25) dazu ausgebildet ist, die abgerufenen Sensordaten an die webbasierte Benutzerschnittstelle (23) weiterzuleiten.

4. Sensorsystem nach einem der vorstehenden Ansprüche,
wobei der Datenrekorder (15) über die webbasierte Benutzerschnittstelle steuerbar ist.

5. Sensorsystem nach Anspruch 4,
wobei der Datenrekorder (15) dazu ausgebildet ist, mittels der webbasierten Benutzerschnittstelle (23) wenigstens ein die Steuerung des Datenrekorders (15) betreffendes Bedienfeld (33) auf dem Endgerät (21) anzuzeigen.

6. Sensorsystem nach Anspruch 5,
wobei das wenigstens eine Bedienfeld (33) einem zum Darstellen der Sensordaten vorgesehenen Anzeigefeld (27) überlagert ist.

7. Sensorsystem nach Anspruch 5 oder 6,
wobei das wenigstens eine Bedienfeld (33) wenigstens ein Bedienelement (34, 35, 36) zum Starten eines Speichervorgangs und/oder wenigstens ein Bedienelement (34, 35, 36) zum Starten eines Abrufvorgangs aufweist.

8. Sensorsystem nach einem der vorstehenden Ansprüche,
wobei die Vermittlungseinrichtung (25) dazu ausgebildet ist, zumindest in einem Live-Modus sämtliche von dem Sensor (13) empfangenen Sensordaten an die webbasierte Benutzerschnittstelle (23) weiterzuleiten und sämtliche von der webbasierten Benutzerschnittstelle (23) empfangenen Steueranweisungen an den Sensor (13) weiterzuleiten.

9. Sensorsystem nach einem der vorstehenden Ansprüche,
wobei der Datenrekorder (15) einen netzwerkfähigen Computer und wenigstens ein mit diesem verbundenes Datenspeichergerät umfasst.

10. Sensorsystem nach einem der vorstehenden Ansprüche,
wobei das Sensorsystem (11) mehrere Sensoren (13) umfasst und die Vermittlungseinrichtung (25) durch einen Server gebildet ist, der mit jedem der Sensoren (13) in Verbindung steht und dazu ausgebildet ist, Sensordaten aller verbundenen Sensoren (13) an die webbasierte Benutzerschnittstelle (23) weiterzuleiten und von der webbasierten Benutzerschnittstelle (23) empfangene, für einen der verbundenen Sensoren (13) bestimmte Steueranweisungen an den betreffenden Sensor (13) weiterzuleiten.

11. Sensorsystem nach einem der vorstehenden Ansprüche,
wobei der Sensor (13) ein Laserscanner, insbesondere ein LIDAR-Sensor, ist.

12. Verfahren zum Steuern eines Sensorsystems (11), das wenigstens einen Sensor (13), der im Betrieb Sensordaten ausgibt, und einen Datenrekorder (15) zum Abspeichern der von dem Sensor (13) ausgegebenen Sensordaten auf einem Speichermedium (17) umfasst, insbesondere eines Sensorsystems (11) nach einem der vorstehenden Ansprüche, mit den Schritten:
- Aufbauen einer Verbindung zwischen dem Datenrekorder (15) und dem Sensor (13),
- Aufbauen einer Verbindung zwischen dem Datenrekorder (15) und einem separaten Endgerät (21),
- Weiterleiten von Sensordaten von dem Sensor (13) an das Endgerät (21) mittels einer Vermittlungseinrichtung (25) des Datenrekorders (15),
- Anzeigen der weitergeleiteten Sensordaten auf dem Endgerät (21) mittels einer webbasierten Benutzerschnittstelle (23),
- Empfangen von Steueranweisungen eines Benutzers am Endgerät (21) über die webbasierte Benutzerschnittstelle (23), und
- Weiterleiten der Steueranweisungen von dem Endgerät (21) an den Sensor (13) mittels der Vermittlungseinrichtung (25).

13. Verfahren nach Anspruch 12,
wobei von dem Sensor (13) ausgegebene Sensordaten auf dem Speichermedium (17) abgespeichert werden und/oder zuvor abgespeicherte Sensordaten von dem Speichermedium (17) abgerufen werden, wenn ein Benutzer dies über die webbasierte Benutzerschnittstelle (23) anweist.

14. Verfahren nach Anspruch 12 oder 13,
wobei auf dem Endgerät (21) mittels der webbasierten Benutzerschnittstelle (23) von dem Speichermedium (17) abgerufene Sensordaten angezeigt werden, wenn ein Benutzer dies über die webbasierte Benutzerschnittstelle (23) anweist.
